# EUROPÄISCHE PATENTANMELDUNG

(11) **EP 2 863 502 A1**
(43) Veröffentlichungstag der Anmeldung: **22.04.2015**
(21) Anmeldenummer: 14188356.1
(22) Anmeldetag: 09.10.2014
(51) Int. Cl.: H02G 3/18, A47B 21/06

(54) **Vorrichtung zum Anschluss elektrischer Geräte**

(30) Priorität: 14.10.2013 DE 202013104632 U; 14.10.2013 DE 202013104631 U
(71) Anmelder: Schulte Elektrotechnik GmbH & Co. Kg, 58515 Lüdenscheid (DE)
(72) Erfinder: Schulte, Siegfried, 58515 Lüdenscheid, Hellersen (DE); Rittinghaus, Hendrik, 58579 Schalksmühle (DE)
(74) Vertreter: Patentanwälte Dörner & Kötter PartG mbB

(57) **Zusammenfassung**

Die Erfindung betrifft eine Vorrichtung zum Anschluss elektrischer Geräte mit mindestens einem Steckdoseneinsatz (2, 10) für Netzspannungsanschlüsse und/oder für Informationsanschlüsse. wobei ein in eine Tisch- oder Arbeitsplatte eingelassener und mit einem Deckel (5) versehener Ringmantel (3) oder ein mit einem Deckel (20) verschließbarer Träger (30) vorgesehen ist, dadurch gekennzeichnet, dass ein elektronisches Bauelement (6, 50) zur drahtlosen Übertragung von elektrischer Energie und/oder Daten versehen ist.

## Beschreibung

Die Erfindung betrifft eine Vorrichtung zum Anschluss elektrischer Geräte mit mindestens einem Steckdoseneinsatz für Netzspannungsanschlüsse und/oder für Informationsanschlüsse.

Vorrichtungen der eingangs genannten Art sind an sich bekannt. Sie stellen für bewegliche Datenträger und andere Stromverbraucher die Netzspannung und/oder die Informationsversorgung bereit. Aufgrund ihrer Versenkbarkeit in einer Tisch- oder Arbeitsplatte bilden sie die Möglichkeit eines Anschlusses der Geräte ohne hierfür auf der Platte Anschlussmöglichkeiten in Form von Steckdosen oder dergleichen bereitstellen zu müssen. Die Arbeitsfläche auf der Platte ist dadurch nicht gemindert.

Die Anzahl der Anschlussplätze in den Vorrichtungen ist aufgrund ihrer Abmessungen begrenzt. Zwar ist es möglich, neben einer Reihe von elektrischen Steckdosen auch Steckvorrichtungen für Informationskabel anzuordnen, so dass die Anschlussmöglichkeit einer Vielzahl von Geräten möglich ist; dennoch ist insbesondere an modernen Büroarbeitsplätzen die Anzahl der Anschlussmöglichkeiten in der Regel nicht ausreichend. Vor allem bei den heute vielfach zur Anwendung kommenden mobilen Geräten ist eine regelmäßige Verbindung mit einem Stromnetz erforderlich, um die in den mobilen Geräten befindlichen Akkumulatoren aufzuladen. Aufgrund der begrenzten Anzahl von Anschlussmöglichkeiten ist ein regelmäßiges Umstecken erforderlich.

Hier will die Erfindung Abhilfe schaffen. Der Erfindung liegt die Aufgabe zugrunde, eine Vorrichtung zum Anschluss elektrischer Geräte zu schaffen, bei der die Möglichkeit des Aufladens der Akkumulatoren von elektrischen Geräten und/oder des Übertragens von Daten möglich ist, ohne hierfür einen zusätzlichen Steckerplatz vorsehen zu müssen. Gemäß der Erfindung wird diese Aufgabe durch die Merkmale des Patentanspruchs 1 gelöst.

Mit der Erfindung ist eine Vorrichtung zum Anschluss elektrischer Geräte geschaffen, bei der eine zusätzliche Möglichkeit des Aufladens bzw. der Datenübertragung möglich ist, ohne zusätzliche Steckplätze in der Vorrichtung vorsehen zu müssen. Durch das elektronische Bauteil erfolgt eine kontaktlose bzw. kabellose Energie- oder Datenübertragung. Auf diese Weise kann durch einfaches Auflegen des elektrischen Geräts auf den Deckel der Vorrichtung eine Energie- und/oder Datenübertragung erfolgen.

Vorteilhaft ist das elektronische Bauelement unter dem Deckel angeordnet. Hierdurch kann ohne Veränderung des Deckels der bekannten Vorrichtungen eine erfindungsgemäße Energie- und Datenübertragung vorgenommen werden. Es bietet sich somit die Möglichkeit, die erfindungsgemäße Ausbildung an herkömmlichen Vorrichtungen vorzusehen und gegebenenfalls nachzurüsten.

In Weiterbildung der Erfindung ist das elektronische Bauelement in dem Deckel angeordnet. Diese Ausgestaltung ist zwar technisch aufwendiger, als im Falle der Anordnung des elektrischen Bauelements auf der Unterseite des Deckels; sie bietet jedoch den Vorteil, dass der Abstand zwischen elektrischem Gerät und elektronischem Bauelement geringer ist, so dass eine höhere Energie- bzw. Datenübertragung erfolgt. Der Wirkungsgrad ist dadurch verbessert.

Äußerst bevorzugt ist das elektronische Bauelement eine Spule. Mit Hilfe der Spule ist die Energieübertragung auf das elektrische Gerät in einfacher und damit preiswerter Weise bei gleichzeitig geringen Kosten möglich.

In Ausgestaltung der Erfindung ist das elektronische Bauelement mit einer Ansteuerelektronik verbunden. Die Ansteuerelektronik ermöglicht eine Regulierung der Daten- bzw. Informationsübertragung. Hierdurch können Fehlbedienungen und dergleichen ausgeschlossen werden.

Vorteilhaft ist das elektronische Bauelement an dem Deckel des Steckdoseneinsatzes angeordnet. Hierdurch kann die Energie- und Datenübertragung durch einfaches Auflegen des elektrischen Geräts auf den Deckel vorgenommen werden.

In Weiterbildung der Erfindung ist der Deckel horizontal verschiebbar an dem Steckdoseneinsatz angeordnet ist. Diese Ausgestaltung bietet gegenüber den üblicherweise klappbaren Deckeln den Vorteil, dass auch bei geöffnetem Deckel ein Auflegen des elektrischen Geräts möglich ist. Daher ist ein Aufladen des elektrischen Geräts bzw. eine Datenübertragung auch dann möglich, wenn die Steckvorrichtungen der Vorrichtung in Benutzung sind und die Vorrichtung geöffnet ist.

Äußerst bevorzugt ist das elektronische Bauelement eine Spule. Mit Hilfe der Spule ist die Energieübertragung auf das elektrische Gerät in einfacher und damit preiswerter Weise bei gleichzeitig geringen Kosten möglich.

In Ausgestaltung der Erfindung ist das elektronische Bauelement mit einer Ansteuerelektronik verbunden. Die Ansteuerelektronik ermöglicht eine Regulierung der Daten- bzw. Informationsübertragung. Hierdurch können Fehlbedienungen und dergleichen ausgeschlossen werden.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die abschnittsweise perspektivische Darstellung einer Tisch- oder Arbeitsplatte mit eingelassener Vorrichtung zum Anschluss elektrischer Geräte bei geschlossenem Deckel;
- Figur 2: die Ansicht der Vorrichtung zum Anschluss elektrischer Geräte;
- Figur 3: eine abschnittsweise und teilweise im Schnitt abgebildete Darstellung der Vorrichtung im Bereich des Deckels;
- Figur 4: die Draufsicht auf die in Figur 2 dargestellte Vorrichtung teilweise im Schnitt;
- Figur 5: die perspektivische Darstellung der Vorrichtung zum Anschluss elektrischer Geräte in anderer Ausbildung;
- Figur 6: die perspektivische und teilweise im Schnitt abgebildete Darstellung der in Figur 5 gezeigten Vorrichtung;
- Figur 7: den Vertikalschnitt durch die in Figur 5 dargestellte Vorrichtung.

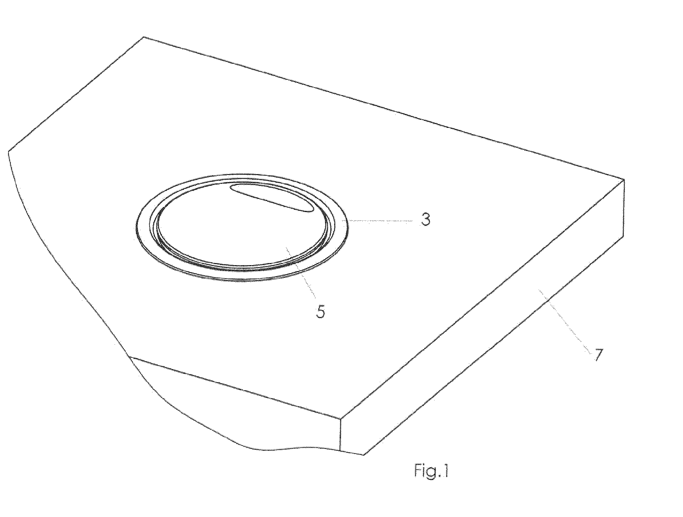

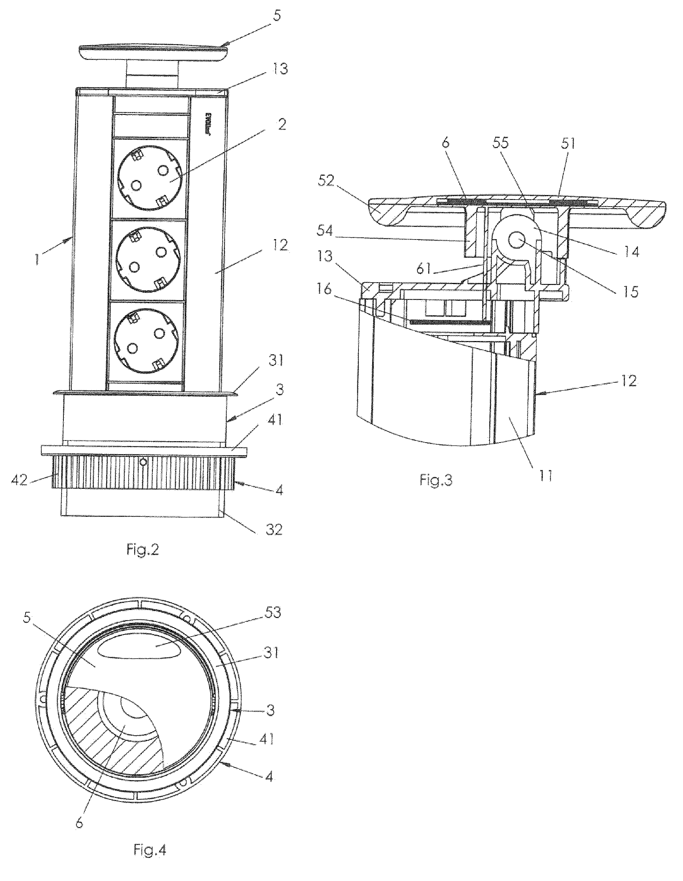

Die als Ausführungsbeispiel nach den Figuren 1 bis 4 gewählte Vorrichtung zum Anschluss elektrischer Geräte umfasst eine Anschlusssäule 1, die Steckdoseneinsätze 2 aufweist. Im Ausführungsbeispiel sind drei Steckdoseneinsätze 2 vorgesehen. Neben den dargestellten Steckdoseneinsätzen 2 können auch Einsteckplätze für die Datenübertragung, bspw. in Form von USB-Anschlüssen (Universal Serial Bus) vorgesehen sein. Die Anschlusssäule 1 ist in einem Ringmantel 3 geführt. Auf den Ringmantel 3 ist ein Gewindering 4 aufschraubbar, der die Vorrichtung in montiertem Zustand an der jeweiligen Tisch- oder Arbeitsplatte 7 verspannt. Am Kopf der Anschlusssäule 1 ist ein Deckel 5 angeordnet, der mit einem elektronischen Bauelement 6 zur drahtlosen Übertragung von elektrischer Energie und/oder Daten versehen ist.

Die Anschlusssäule 1 umfasst einen Profilabschnitt, der im Ausführungsbeispiel aus Metall hergestellt ist. Sie weist Führungen 11 auf, die mit - nicht dargestellten - Führungsnasen im Ringmantel 3 korrespondieren und mit deren Hilfe eine vertikale Verschiebbarkeit der Anschlusssäule 1 in dem Ringmantel 3 ermöglicht ist. Die Anschlusssäule 1 hat in ihrer Draufsicht eine teilkreisförmige Ausbildung. Die gerade ausgeführte Seite 12 der Anschlusssäule 1 nimmt die Steckdoseneinsätze 2 auf und ist seitlich durch die Führungen 11 begrenzt. An ihrem dem Deckel 5 zugewandten Ende ist die Anschlusssäule 1 mit einer Kopflatte 13 versehen. An der Kopfplatte 13 sind Lagerstege 14 zur Aufnahme eines Gelenkbolzens 15 angeordnet. Unter der Kopfplatte 13 befindet sich eine Ansteuerelektronik 16, die im Ausführungsbeispiel in Form einer Steuerplatine ausgebildet ist und die an ein Netzteil angeschlossen ist.

Der Ringmantel 3 weist an seinem dem Deckel 5 zugwandten Ende einen Flansch 31 auf, mit dem der Ringmantel 3 in montiertem Zustand auf der Tisch- oder Arbeitsplatte aufliegt. Auf seinem Umfang ist der Ringmantel 3 bereichsweise mit einem Außengewinde 32 versehen, welches sich in Abwandlung des Ausführungsbeispiels auch über den gesamten Ringmantel 3 erstrecken kann. Innen sind in dem Ringmantel - nicht dargestellte - Führungsnasen vorgesehen, die mit den Führungen 11 der Anschlusssäule 1 korrespondieren und eine axiale Verschiebbarkeit der Anschlusssäule 1 in dem Ringmantel 3 ermöglichen. Die Kombination der Führungsnasen des Ringmantels 3 und der Führungen 11 der Anschlusssäule 1 ist vorteilhaft mit einer Bremsfunktion versehen, so dass die Anschlusssäule 1 auch bei nur bereichsweisem Herausziehen aus dem Ringmantel 3 ihre Position hält. An ihrem dem Boden zugewandten Ende ist in den Führungen 11 ein Anschlag ausgebildet, der ein vollständiges Herausziehen der Anschlusssäule 1 aus dem Ringmantel 3 verhindert.

Der Gewindering 4 weist innen ein Gewinde auf, welches in montiertem Zustand mit dem Gewinde 32 des Ringmantels 3 korrespondiert. Aufgrund der Gewindekombination ist der Gewindering 4 auf dem Ringmantel 3 axial bewegbar. Der Gewindering 4 weist auf seiner dem Deckel 5 zugewandten Seite einen Anschlag 41 auf, mit dem die Vorrichtung an der Tisch- oder Arbeitsplatte festspannbar ist. Außen ist der Gewindering 4 mit einer Riffelung 42 ausgestattet, die eine verbesserte Handhabung des Gewinderings 4 beim Aufschrauben auf den Ringmantel 3 ermöglicht.

Der Deckel 5 ist im Ausführungsbeispiel zweigeteilt ausgeführt. Es ist somit ein Oberteil 51 und ein Unterteil 52 gebildet. In dem Oberteil 51 ist auf der Ansichtsseite eine Mulde 53 ausgeformt, die der Betätigung des Deckels 5 dient. An dem Unterteil 52 des Deckels 5 ist ein mantelförmiger Ansatz 54 angeformt. Innerhalb des mantelförmigen Ansatzes 54 weist der Deckel 5 eine Bolzenaufnahme 55 auf. In der Bolzenaufnahme 55 ist der Gelenkbolzen 15 deckelseitig gelagert, so dass im Zusammenspiel mit der Lagerung des Gelenkbolzens 15 in den Lagerstegen 14 der Anschlusssäule 1 die Kippbarkeit des Deckels 5 ermöglicht ist. Die Lagerung steht unter dem Einfluss einer - nicht dargestellten - Feder, die eine Rückstellkraft auf den Deckel 5 ausübt, so dass dieser selbsttätig in seine geschlossene Position zurückfahren kann.

Zwischen dem Oberteil 51 und dem Unterteil 52 des Deckels 5 ist das elektronische Bauelement 6 angeordnet. Im Ausführungsbeispiel ist das elektronische Bauelement 6 eine Spule. Andere elektronische Bauelemente sind je nach Art der zur drahtlosen Übertragung vorgesehenen Daten oder Energien möglich. Beispielsweise kann es sich auch bei dem elektronischen Bauelement 6 um eine Bluetooth-Sendeeinheit handeln, mit der Daten an ein Empfangsgerät übertragen werden können. In Abwandlung des Ausführungsbeispiels besteht auch die Möglichkeit, das elektronische Bauelement 6 unter dem Deckel 5 anzuordnen, so dass auf die zweiteilige Ausbildung des Deckels 5 verzichtet werden kann. Das elektronische Bauelement 6 ist über ein Flachbandkabel 61 mit der Ansteuerelektronik 16 verbunden. Selbstverständlich besteht in Abwandlung des Ausführungsbeispiels die Möglichkeit, andere Arten der Verbindung zwischen Bauelement 6 und Ansteuerelektronik 16 zu ermöglichen.

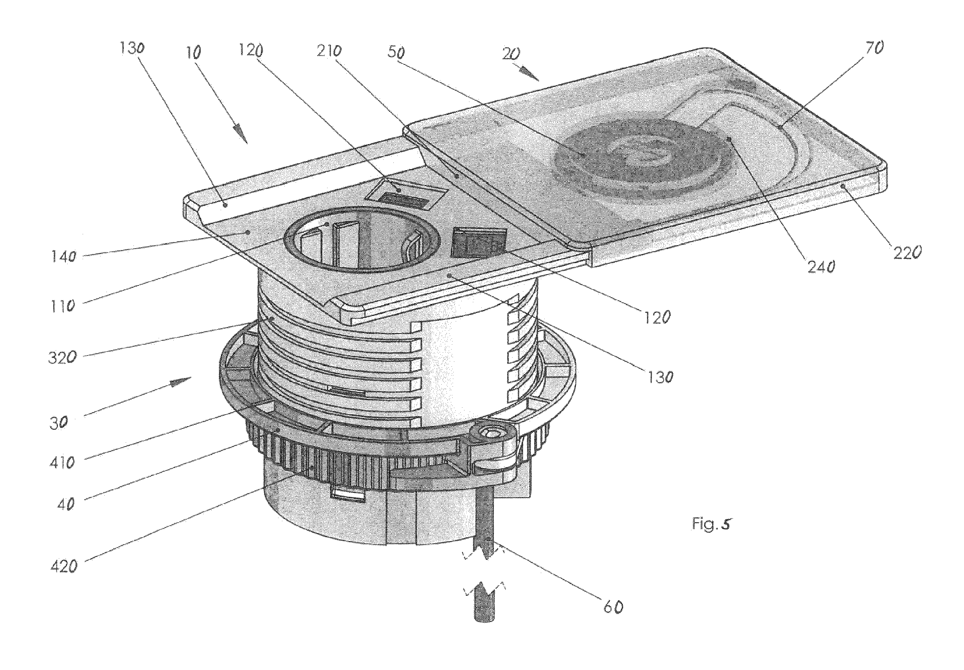

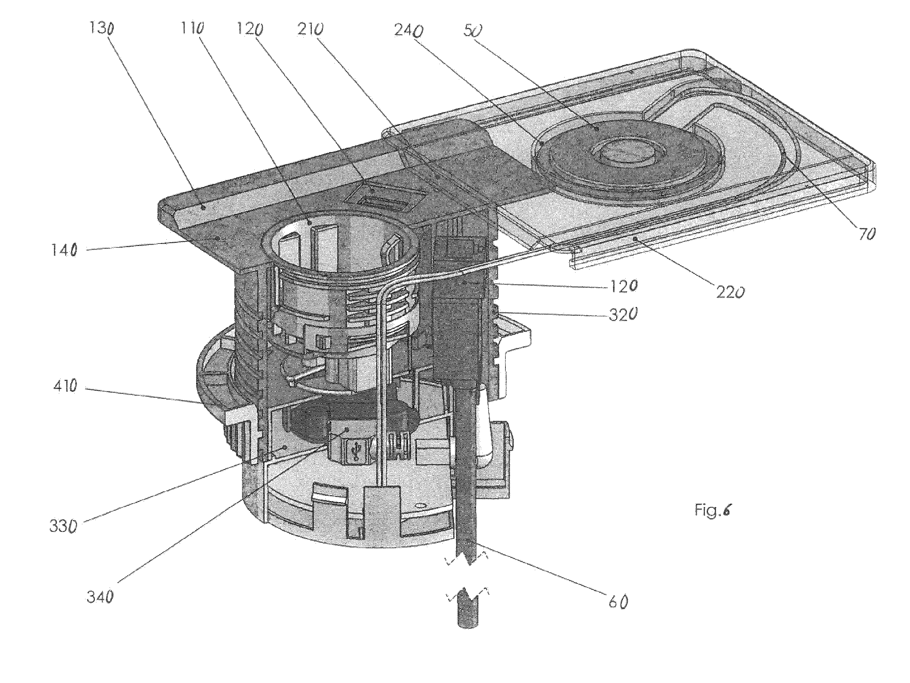

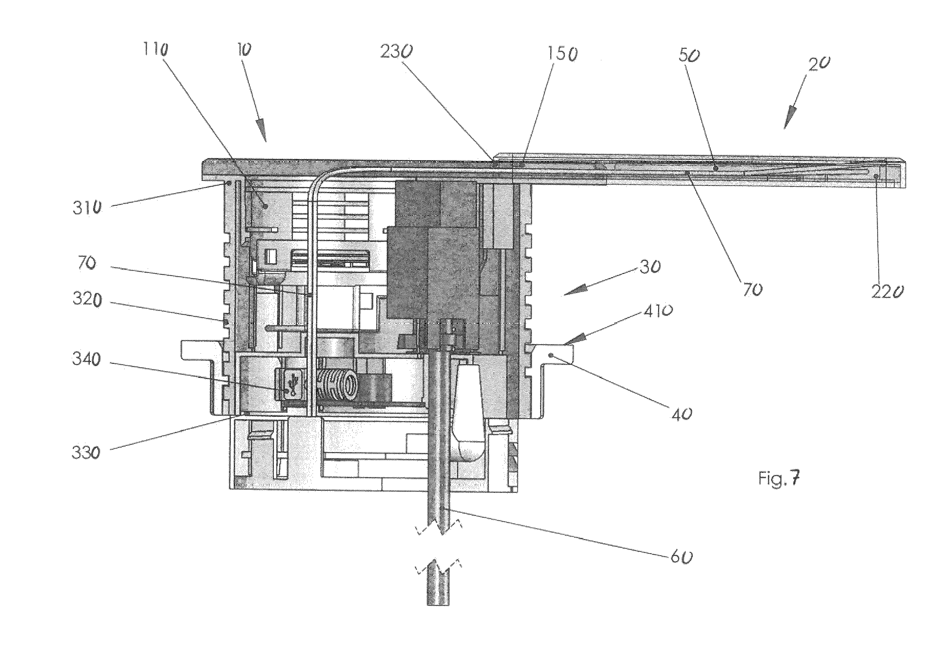

Die als Ausführungsbeispiel nach den Figuren 5 bis 7 gewählte Vorrichtung zum Anschluss elektrischer Geräte weist einen Steckdoseneinsatz 10 auf. An dem Steckdoseneinsatz 10 ist ein Träger 30 vorgesehen, der mit einem Deckel 20 verschließbar ist. Steckdoseneinsatz 10 und Träger 30 sind im Ausführungsbeispiel einteilig ausgebildet. Auf den Träger 30 ist ein Gewindering 40 aufschraubbar, der die Vorrichtung in montiertem Zustand an der jeweiligen Tisch- oder Arbeitsplatte verspannt. An dem Steckdoseneinsatz 10 ein elektronischen Bauelement 50 zur drahtlosen Übertragung von elektrischer Energie und/oder Daten versehen ist

Der Steckdoseneinsatz 10 weist im Ausführungsbeispiel drei Einsteckplätze 110, 120 auf. Der Einsteckplatz 110 hat die Form einer üblichen Steckdose zur Übertragung elektrischer Energie; die Einsteckplätze 120 sind für die Datenübertragung vorgesehen. Sie sind in Form von USB-Anschlüssen (Universal Serial Bus) ausgebildet. Die Anordnung von anderen sowie einer anderen Anzahl von Einsteckplätzen ist möglich. Die Einsteckplätze 110, 120 sind jeweils an Netz- oder Datenkabel 6 angeschlossen.

Der Steckdoseneinsatz 10 hat eine im Wesentlichen viereckige Ausbildung und ist horizontal ausgerichtet. An seinen beiden Längsseiten ist der Steckdoseneinsatz 10 mit Einfassungen 130 versehen, wodurch im Zentrum des Steckdoseneinsatzes 10 ein Bett 140 hervorgerufen ist, in dem sich die Einsteckplätze 110, 120 befinden. An ihrem einen Ende sind die Einfassungen 130 jeweils mit einem Anschlag 150 versehen.

Der Deckel 20 hat eine im Wesentlichen viereckige Form. Die Größe des Deckels 20 entspricht der Größe des Steckdoseneinsatzes 10, so dass der Deckel 20 den Steckdoseneinsatz 10 in geschlossenem Zustand der Vorrichtung vollständig überdeckt. Um das Eindringen von Staub o. dgl. in den Steckdoseneinsatz 10 zu vermeiden, ist der Deckel 20 an seiner einen Stirnseite mit einer Schürze 210 versehen, die die Kontur der Einfassungen 130 und des Betts 140 nachbildet. An seinen Längsseiten und an der anderen Stirnseite ist der Deckel 20 mit einer Umrandung 220 versehen. Die Umrandung 220 umgreift an den Längsseiten des Deckels 20 die Längsseiten des Steckdoseneinsatzes 10. Es ist so eine Führung des Deckels 20 auf dem Steckdoseneinsatzes 10 geschaffen. An ihrem der Schürze 210 zugewandten Ende ist an der Umrandung 220 ein Anschlag 230 ausgebildet, der im Zusammenwirken mit dem Anschlag 150 ein vollständiges Abziehen des Deckels 20 von dem Steckdoseneinsatz 10 verhindert. In seinem Zentrum ist der Deckel 20 mit einer Vertiefung 240 versehen.

Der Träger 30 ist nach Art eines Ringmantels ausgebildet. Er weist an seinem dem Deckel 20 zugwandten Ende einen Flansch 310 auf, mit dem der Träger 30 in montiertem Zustand auf der Tisch- oder Arbeitsplatte aufliegt. Auf seinem Umfang ist der Träger 30 bereichsweise mit einem Außengewinde 320 versehen, welches sich in Abwandlung des Ausführungsbeispiels auch über den gesamten Träger 30 erstrecken kann. Der Träger 30 ist von einem Boden 330 begrenzt. Auf dem Boden 330 befindet sich eine Ansteuerelektronik 340, die im Ausführungsbeispiel in Form einer Steuerplatine ausgebildet ist und die an ein Netzteil angeschlossen ist. Die Ansteuerelektronik 340 ist über eine Leitung 70 mit dem elektronischen Bauelement 50 verbunden. Bei der Leitung 70 handelt es sich im Ausführungsbeispiel um ein Flachbandkabel. Selbstverständlich besteht in Abwandlung des Ausführungsbeispiels die Möglichkeit, andere Arten der Verbindung zwischen Bauelement 50 und Ansteuerelektronik 340 zu ermöglichen.

Der Gewindering 40 weist innen ein Gewinde auf, welches in montiertem Zustand mit dem Gewinde 320 des Trägers 30 korrespondiert. Aufgrund der Gewindekombination ist der Gewindering 40 auf dem Träger 30 axial bewegbar. Der Gewindering 40 weist auf seiner dem Deckel 20 zugewandten Seite einen Anschlag 410 auf, mit dem die Vorrichtung an der Tisch- oder Arbeitsplatte festspannbar ist. Außen ist der Gewindering 40 mit einer Riffelung 420 ausgestattet, die eine verbesserte Handhabung des Gewinderings 40 beim Aufschrauben auf den Ringmantel 30 ermöglicht.

In der Vertiefung 240 des Deckels 20 ist das elektronische Bauelement 50 angeordnet. Im Ausführungsbeispiel ist das elektronische Bauelement 50 eine Spule. Andere elektronische Bauelemente sind je nach Art der zur drahtlosen Übertragung vorgesehenen Daten oder Energien möglich. Beispielsweise kann es sich auch bei dem elektronischen Bauelement 50 um eine Bluetooth-Sendeeinheit handeln, mit der Daten an ein Empfangsgerät übertragen werden können.

Mit der erfindungsgemäßen Vorrichtung zum Anschluss elektrischer Geräte ist die bisherige vielfältige Einsatzmöglichkeit der bekannten Vorrichtungen um eine drahtlose bzw. kabellose Energie- und/oder Datenübertragung erweitert. Im Falle der Ausbildung der drahtlosen Energieübertragung kann in einfacher Weise bspw. ein Mobilfunktelefon auf den Deckel 5 der Anschlusssäule 1 oder den Deckel 20 gelegt werden. Durch die Ausbildung des Bauelements 6 bzw. des Bauelements 50 in Form einer Spule wird dann die elektrische Energie durch Nutzung der elektromagnetischen Felder an den aufladbaren Akku des Mobilfunktelefons übertragen. Somit findet eine Ladung des Akkus durch einfaches Auflegen auf die Anschlusssäule 1 bzw. auf den Deckel 20 statt. Eine Verbindung des Mobilfunktelefons mit einem Ladekabel ist somit nicht mehr erforderlich. Dies erhöht einerseits die Flexibilität, andererseits sind die in der Anschlusssäule lediglich begrenzt vorgesehenen Steckdoseneinsätze nicht durch das Ladekabel belegt. Außerdem entfallen durch die drahtlose Energie- oder Datenübertragung elektrische Kontaktprobleme.

## Patentansprüche

1. Vorrichtung zum Anschluss elektrischer Geräte mit mindestens einem Steckdoseneinsatz (2, 10) für Netzspannungsanschlüsse und/oder für Informationsanschlüsse, wobei ein in eine Tisch- oder Arbeitsplatte eingelassener und mit einem Deckel (5) versehener Ringmantel (3) oder ein mit einem Deckel (20) verschließbarer Träger (30) vorgesehen ist, **dadurch gekennzeichnet, dass** ein elektronisches Bauelement (6, 50) zur drahtlosen Übertragung von elektrischer Energie und/oder Daten versehen ist.

2. Vorrichtung nach Anspruch 1, **dadurch gekennzeichnet, dass** der Deckel (5) mit dem elektronischen Bauelement (6) versehen ist.

3. Vorrichtung nach Anspruch 2, **dadurch gekennzeichnet, dass** das elektronische Bauelement (6) unter dem Deckel (5) angeordnet ist.

4. Vorrichtung nach Anspruch 2, **dadurch gekennzeichnet, dass** das elektronische Bauelement (6) in dem Deckel (5) angeordnet ist.

5. Vorrichtung nach einem oder mehreren der vorgenannten Ansprüche, **dadurch gekennzeichnet, dass** das elektronische Bauelement (6) eine Spule ist.

6. Vorrichtung nach einem oder mehreren der vorgenannten Ansprüche, **dadurch gekennzeichnet, dass** das elektronische Bauelement (6) mit einer Ansteuerelektronik (16) verbunden ist.

7. Vorrichtung nach Anspruch 1, **dadurch gekennzeichnet, dass** der Steckdoseneinsatz (10) mit dem elektronischen Bauelement (50) versehen ist.

8. Vorrichtung nach Anspruch 7, **dadurch gekennzeichnet, dass** das elektronische Bauelement (50) an dem Deckel (20) des Steckdoseneinsatzes (10) angeordnet ist.

9. Vorrichtung nach Anspruch 8, **dadurch gekennzeichnet, dass** der Deckel (20) horizontal verschiebbar an dem Steckdoseneinsatz (10) angeordnet ist.

10. Vorrichtung nach einem oder mehreren der vorgenannten Ansprüche, **dadurch gekennzeichnet, dass** das elektronische Bauelement (50) eine Spule ist.

11. Vorrichtung nach einem oder mehreren der vorgenannten Ansprüche, **dadurch gekennzeichnet, dass** das elektronische Bauelement (50) mit einer Ansteuerelektronik (340) verbunden ist.
